# EUROPEAN PATENT SPECIFICATION

(11) **EP 3 181 974 B1**
(45) Date of publication and mention of the grant of the patent: **24.10.2018**
(21) Application number: 16199435.5
(22) Date of filing: 18.11.2016
(51) Int. Cl.: F16L 23/00, G09B 25/02

(54) **DEVICE FOR TESTING AND/OR TRAINING A FLANGE FITTER**
EINRICHTUNG ZUM TESTEN UND/ODER AUSBILDEN VON FLANSCH-MONTEUREN
DISPOSITIF POUR FAIRE PASSER DES TESTS ET/OU ENTRAINER DES MONTEURS DE BRIDE

(30) Priority: 26.11.2015 NL 2015860
(43) Date of publication of application: 21.06.2017
(73) Proprietor: P.A.M Dijkgraaf Holding B.V., 3247 AS Dirksland (NL)
(72) Inventor: Dijkgraaf, Peter A.M., 3247 AS Dirksland (NL)
(74) Representative: Luten, Martin Haaije

(56) References cited:
- WO-A1-2015/115172
- JP-A- 2001 166 681
- US-A- 3 015 883
- Stefan Schulz ET AL: "EN 1591-4 - The key to success?", , 30 November 2013 (2013-11-30), XP055287904, Retrieved from the Internet: URL:http://europeansealing.com/uploads/res ources/ESA_BAT_1311_EN_1591_4.pdf [retrieved on 2016-07-12]

## Description

The present invention relates to a device for testing and/or training a flange fitter, wherein the device comprises a frame for placing the device on a ground surface and at least one pair of flanges which are mutually connectable by means of a flange connection, wherein a first flange in the flange pair is connected to the frame. The invention also relates to a method for manufacturing such a device. The invention further relates to a method for testing the competence of a flange fitter.

In industrial installations, for instance in the petrochemical industry, a flange connection is an important and much used sealing method in and between pipelines. The failure of such a flange connection can also have serious consequences for safety, environment, profitability and licence to operate. It is therefore of essential importance that the flange connections in such an installation are of good quality.

The quality of such a flange connection depends in very great measure on the level of knowledge and the professional skill of the flange fitter who has made the connection. In order to improve this level the European standard EN 1591-4, or "qualification of personal competency", came into force in 2013, as is discussed in "EN 1591-4 - The key to success?", Stefan Schultz et al., 30 November 2013, European Sealing Association. In addition, it is mandatory in the Netherlands for flange fitters in the petrochemical industry to be in possession of a WF (pr) (Working on flange connections according to protocol) certificate. On this training course so-called flange trees are used as device for testing and/or training a flange fitter. Such a flange tree has a frame, typically in the form of an upright tube, on which are arranged a number of loops in the form of pipelines. These loops are formed by short pipe parts which can be mutually connected by flange connections. The flange fitter here has to connect a pair of flanges in this test device. It is however a drawback of these known test systems that, because of the pipelines used for connection of the flange pairs, they have large dimensions and are relatively heavy. Since the loops arranged as frame on the upright pipe are formed by separate pipe parts which can be mutually connected by flange connections, there is also the risk that, when these connections are broken, the pipe parts, which have a relatively great weight, can drop downward. This can make the use of these known devices hazardous. Practical experience has however shown that these measures still do not provide sufficient guarantee of quality and craftsmanship.

A training method for enhancing the skill of workers is disclosed in Japanese patent application JP 2001 166681 A. International patent application WO 2015/115172 A1 discloses a flange tightening training system for training in suitable tightening when tightening a flange on parts for connecting pipes to each other.

Maintenance of large chemical installations takes place in practice during operation, but also by shutting down an installation for a short time and in the meantime carrying out the necessary maintenance, for instance the replacement or inspection of flange connections. During such major factory shutdowns a large number of flange fitters are required to carry out these operations efficiently. Since it cannot automatically be assumed that these flange fitters have a sufficient level and professional skill, it is increasingly desirable that, before maintenance operations begin, the fitters in question must successfully complete a test in order to demonstrate their competence.

Such a requirement entails in practice that a flange fitter must make a test connection between two flanges, wherein the quality of this connection is an indication of the competence of this flange fitter.

The present invention therefore has for its object, among others, to at least partially solve at least one of the above stated problems and to provide an efficient, simple and/or safe device which is preferably a realistic simulation of a practical situation suitable for testing and/or training a flange fitter. In order to achieve this and other objects the device of the type stated in the preamble has the special feature that the second flange in the flange pair is connected by means of a support element to the frame in order to support the second flange in at least the uncoupled state of the flange pair. The support element here prevents the second flange from simply dropping downward when the flange connection between this first and second flange is uncoupled. The support element supports the second flange here so that this second flange is also supported by the frame even when this second flange is not connected to the first flange.

In addition to improving the safety of the device, it is moreover desirable to be able to test the competence of a flange fitter more thoroughly. According to a preferred embodiment the support element is configured for this purpose to impose the relative position of the flange in the flange pair in the coupled state. In addition to supporting the second flange in the uncoupled state so as to prevent this flange dropping and/or detaching, the support element can also be used to impose the relative position of the flanges in connected state. In other words, the support element limits the relative freedom of movement of the first and the second flange in this coupled state, i.e. in the situation where these two flanges contact each other or are at least mutually connectable, so that the fitter can be tested at predetermined orientations of the flanges in the flange pair.

It is then particularly advantageous when the support element positions the flanges in this coupled state such that the flanges have a mutually differing alignment. The connection of substantially perfectly aligned flanges, i.e. the central axes which lie perpendicularly of the end surface of the flange and pass through the centre of this surface are substantially wholly overlapping or substantially wholly aligned, is not particularly complicated. It is precisely when the flanges differ from each other in respect of orientation that making a good flange connection requires additional professional skill of a flange fitter.

According to a preferred embodiment, the support element for this purpose positions the flanges with a differing alignment such that:
- the central axes of the flanges lie at a mutual angle wherein a central axis lies perpendicularly of an end surface of a flange;
- the central axes extend parallel and at a mutual distance from each other; and/or
- the flanges are rotated about the central axis relative to each other.

The support element is designed here, for instance in respect of form and/or stiffness, such that the relative positions in the coupled state of the flange pair have a differing alignment. This difference is preferably selected here such that this difference still falls within the applicable quality standards, as will be discussed later in more detail, while differing sufficiently from an ideal alignment to be able to sufficiently test the competence of a flange fitter.

In order to create a realistic test situation, according to a further preferred embodiment the second flange is movable between an uncoupled state at a distance from the first flange and a coupled state in which the flanges are in contact with each other, wherein the support element is configured to hold the second flange in the uncoupled state in a rest position. In unloaded and uncoupled state of the flange pair the second flange will thus be located at a distance from the first flange so that during mutual connection of the flange pair a fitter must move the second flange to the first flange. It is preferred here that in this coupled state the position of the second flange is determined as described above by the support element. As will be described below in more detail, it is moreover preferred that the movement from the uncoupled state to the coupled state corresponds, in terms of perception and required competence of the flange fitter, to a practical situation during relative movement of the flanges in a piping system.

As already indicated briefly above, a drawback of the existing devices for testing a flange fitter in the form of flange trees is that they have very large dimensions, since the flanges for connection are incorporated in a piping system of corresponding dimensions with an ideal alignment. With the support element according to the invention this is no longer necessary and a more compact system can be provided since support of the second flange, even in the uncoupled state, is achieved with the support element. It is therefore recommended that the second flange is connected to the frame via the support element and without flange connection. This moreover enables a better adjustment of the relative orientation of the flanges in the coupled state as described above.

An exceptionally compact and efficient device is obtained when the support element extends between and connects the two flanges. The support element can for instance be embodied as a support bracket connecting the two flanges. The dimensions of the support element, for instance in the form of this support bracket, are preferably smaller here than the dimensions of a pipeline matching the dimensions of the flanges for coupling.

The dimensioning of flanges is more specifically determined by the dimensions of the pipelines they must mutually connect. For the existing flange trees it is therefore the case that when flanges of relatively large dimensions have to be tested, the pipelines which support and connect these flanges must also be correspondingly large. This results as described above in the large dimensions of these flange trees. A relatively compact and light device can be obtained by supporting the flanges in the flange pair, or at least not the second flange, in the device according to the invention not by making use of pipelines with dimensions corresponding to the dimensions of these flanges but with a compact support element.

According to a further preferred embodiment, the flanges have dimensions for connecting pipelines of corresponding dimensions, wherein the cross-sectional dimensions of the support element are smaller than the cross-sectional dimensions of these pipelines. The dimensions of the support element can be selected freely here and are not limited to the dimensions of the pipelines matching the dimensions of the flanges as is usual in the existing flange trees. These dimensions are preferably more than a quarter smaller than the cross-sectional dimensions of these pipelines.

A compact assembly of the device is obtained when the support element is connected in a substantially radial direction to the first and/or second flange as seen relative to a central axis of the respective first and/or second flange. Where normal pipelines are provided at the outer ends with a flange for connection so that these pipes on a flange extend parallel to this central axis, with the device according to the invention the second flange can be supported with a support element which preferably lies substantially transversely of this central axis. This results in a compact assembly in the direction of this central axis. The support element preferably takes a U-shaped form here, wherein the outer ends of the legs of the U-shape are connected to the flanges.

In order to nevertheless provide a realistic environment for testing the competence of a flange fitter as already described above despite the smaller dimensions of the support element, according to a further preferred embodiment the support element has a stiffness substantially corresponding to the stiffness of a pipeline with dimensions corresponding to the dimensions of the flanges. The support element preferably has a calculated stiffness here which corresponds to a chosen practical situation with associated stiffness and alignment difference of a pipeline with dimensions corresponding to the dimensions of the flanges. Despite the preferably relatively small dimensions of the support element according to the invention, it is possible by means of for instance the choice of material and/or the form of the support element to create a perception of the mutual coupling of the two flanges in the flange pair which corresponds to the experience of coupling the two flanges in a realistic installation formed by pipelines of corresponding dimensions.

It is advantageous here for the support element to be configured so that a movement of the second flange from the uncoupled state to the coupled state as described above substantially corresponds in terms of stiffness to the same movement in the pipeline of corresponding dimensions.

In order to enable efficient testing of a number of flange fitters the device according to a further preferred embodiment comprises a plurality of flange pairs with support elements arranged at mutual distance from each other on the frame. A plurality of flange pairs can then be arranged on a single frame so that a different fitter can be tested on each flange pair. The flange pairs are preferably separated from each other with partition walls. In order to make the device mobile so that it can be transported easily to an installation for the purpose of testing the competence of the fitters, for instance during a major maintenance operation, the frame is preferably provided with displacing means, for instance in the form of wheels. The frame can in this way be easily moved and for instance pulled onto a trailer for subsequent transport in efficient manner. It is also possible for the device to be provided with receiving spaces for receiving forks of a forklift truck.

According to a further preferred embodiment, the device is provided with coupling means for mutually coupling at least two devices according to the invention. This makes it possible where necessary to move and utilize a plurality of devices according to the invention, for instance two, in efficient manner.

The invention also relates to a method for manufacturing a device for testing and/or training a flange fitter according to the invention, wherein the method comprises the steps of:
- determining a type of flange for use as the first and second flange;
- determining the relative position of the two flanges in a coupled position;
- designing the support element in dependence of the determined flange type and the determined relative position; and
- manufacturing the device in accordance with the determined design.

A support element is designed according to the invention subject to the chosen type of flange and the chosen relative position of the flanges in the coupled position. This makes it possible with the obtained device to test different situations in respect of relative orientation of flanges.

As already stated above, it is possible with the device according to the invention to create test situations which vary from the ideal situation in which the flanges are in substantially ideal alignment. According to a preferred embodiment, determining the relative position comprises for this purpose of positioning the flanges with a mutually differing alignment wherein:
- the central axes of the flanges lie at a mutual angle, wherein a central axis lies perpendicularly of an end surface of a flange;
- the central axes extend parallel and at a mutual distance from each other; and/or
- the flanges are rotated about the central axis relative to each other.

In practice only flanges are coupled to each other which have a mutual difference in orientation which falls within a predetermined range. Differences which are too large can result for instance in excessively high local pressures on the sealing element between the flanges, this increasing the possibility of leakage. Such permitted differences are laid down in standards, of which for instance ASME PCC-1-2013 is an example, this specifying the ranges within which specific spaced-apart flanges may still be connected and other cases in which the flanges have to be removed from the pipelines in order to arrange new, better aligned flanges. A preferred embodiment of the method then preferably comprises the step of determining a maximum permissible differing alignment of two flanges, preferably on the basis of applicable standards for the determined type of flange, wherein determining the relative position comprises of determining a mutually differing alignment which roughly corresponds to, but falls within, this maximum permissible differing alignment. This therefore makes it possible to simulate the most difficult conditions corresponding to practical situations in which a flange fitter would have to do his/her work in order to then be able to test these conditions.

In order to make these conditions as realistic as possible it is recommended as described above that the relative movement of the flanges for the purpose of making this connection corresponds as far as possible to the relative movement of these flanges in a representative piping system, i.e. a piping system with dimensions corresponding to these flanges. A further preferred embodiment then comprises the step of determining a stiffness of a piping system corresponding to the determined flange type. The stiffness of a piping system can then be determined from calculations, for instance through finite element analysis, and the support element is then preferably designed with a corresponding stiffness. This results in a realistic test situation.

The invention further relates to a method for testing the competence of a flange fitter, comprising the steps of:
- providing a device according to the invention or obtained with the method according to the invention, wherein the second flange is in the uncoupled position;
- having the first and second flange coupled by the fitter; and
- inspecting the coupling between the first and the second flange.

The invention will be further elucidated with reference to figures in the drawing which show a preferred embodiment of the device according to the invention, and in which:
Figures 1A-C show respectively a side, top and front view of a flange pair in a device according to the invention;
Figure 2 shows an alternative embodiment of the support element;
Figure 3 is a side view of the device according to the invention;
Figure 4 is a top view of two devices according to the invention;
Figure 5 is a schematic top view of two devices placed together;
Figures 6A, B show schematically the transport of an assembly of devices according to the invention;
Figures 7A, B show schematically the mutual connection of two devices;

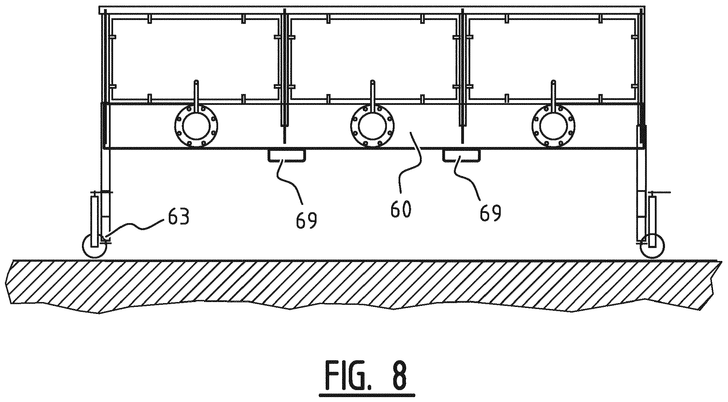

Figure 8 shows a schematic side view of a further example of the device.

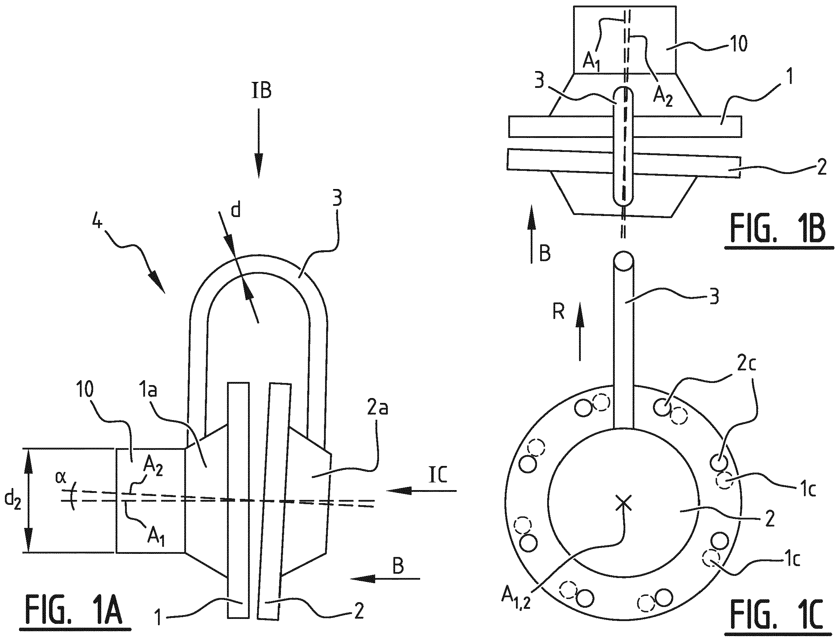

Figures 1A-C show schematically a flange pair 4 according to the invention in side view (figure 1A), in top view (figure 1B) as seen along arrow IB in figure 1A, and in front view (figure 1C) as seen from a direction IC in figure 1A. Flange pair 4 comprises a first flange 1 and a second flange 2. Such a flange 1,2 is provided with an inclining portion 1a, 2a which in the case of first flange 1 transposes into a pipe 10 with which first flange 1 is connected to a frame 6, as will be discussed in more detail below.

Flange pair 4 is configured to enable testing of the competence of a flange fitter. It is important here that whether a flange fitter can also make a good connection in difficult cases between the two flanges 1 and 2 is also tested. In order to create such a difficult case the relative position of flanges 1 and 2 is imposed by a support element 3. Shown for instance in figure 1A is that the central axis A1, which lies perpendicularly of the surface of flange 1 and runs through the centre of this surface, lies at an angle α to the central axis A2 of second flange 2. Such a difference in central axes A1, A2 can also be seen in the top view IB. As stated, this relative position is imposed by support element 3, which in this embodiment is embodied as a U-shaped bracket 3 extending between the two flanges 1, 2, and more particularly between the inclining portions 2a, 2b in this non-limitative example. Other than for instance a typical pipe, as indicated for instance with 10 in figures 1A and 1B, support element 3 is connected in a radial direction, indicated with R in figure 1C, to the flanges. This enables a compact assembly of the device, particularly in the direction of the central axes A1, A2.

The diameter d1 of the support element is moreover significantly much smaller than the diameter d2 of pipe part 10 for which the flange 1 is designed. Other than in conventional flange trees, wherein flanges 1 and 2 are mutually aligned by a piping system with dimensions corresponding to the dimensions of flanges 1 and 2, the second flange 2 can be supported with a relatively compact support bracket 3 relative to first flange 1.

It is advantageous here that support element 3 is designed such that the movement of the second flange to the first flange (indicated schematically with the arrow B in figures 1A and 1B) is similar in terms of perception and stiffness to a corresponding movement of these flanges in an actual piping system. The stiffness and form of support element 3 is preferably selected accordingly for this purpose.

Flanges 1 and 2 as shown in figures 1A and 1C are in the uncoupled rest position. In this position flanges 1 and 2 lie spaced apart. This is the starting situation for the test. A flange fitter must now move flanges 1 and 2 toward each other such that flanges 1 and 2 are aligned such that a good connection is possible. In addition to the differing central axes as shown in figures 1A and 1B, figure 1C further illustrates that a variation is also possible about these central axes A1, A2. It can be seen for instance that flange holes 1c of the first flange and flange holes 2c of second flange 2 are rotated relative to each other.

Although the shown differences, and particularly those of the rotated flange holes, appear very large in these schematic figures, the difference imposed by support element 3 is determined by the maximum permissible differences in practice, as specified for instance in the relevant standards. The differences for the flanges can then be selected such that they fall within this range of maximum permitted differences while at the same time not creating too simple a situation for the flange fitter to be tested.

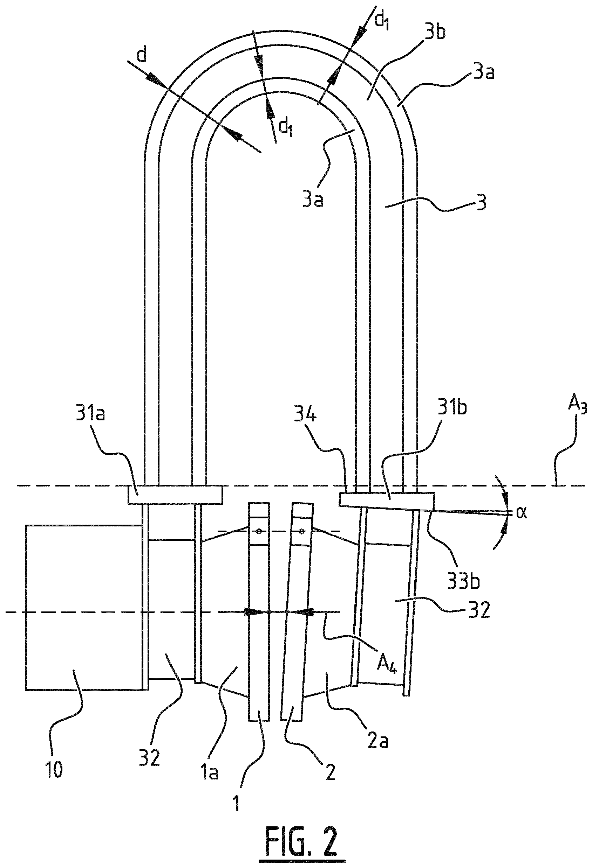

Shown in figure 2 is a further embodiment of a support bracket 3. In this embodiment support bracket 3 is constructed from two U-shaped tubes 3a between which an element, in this example a plate 3b, is arranged in order to mutually connect tubes 3a. A stiff construction is thus obtained. The diameters d1 of tubes 3a are again preferably smaller than a diameter d2 of a pipe 10. The total width d of support element 3 is preferably also smaller than this diameter d2 of pipe 10.

Also shown in this figure is that a support element 3 can be connected to the flanges by means of adapters 31a,b. These adapters 31a,b can be used to adjust the relative position of flanges 1, 2. A second surface 33b, which in this example is connected via connecting element 32 to flange 2, can lie at an angle α relative to the first surface 34 which is connected to support element 3. Flanges 1, 2 will then also be placed at such an angle α. Also shown is that adapters 31a, 31b are not vertically aligned, as indicated with the axis A3. Flanges 1, 2 are hereby placed vertically offset from each other. It can also be seen that support element 3, with or without adapters 31a,b, imposes a distance A4 between flanges 1, 2.

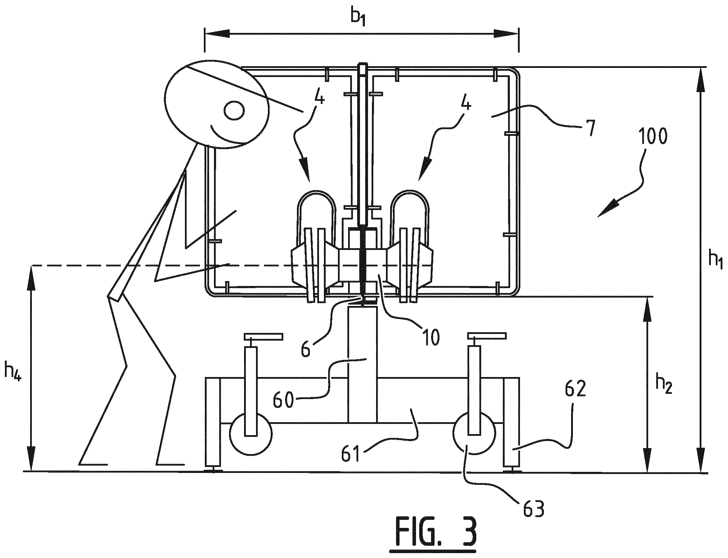

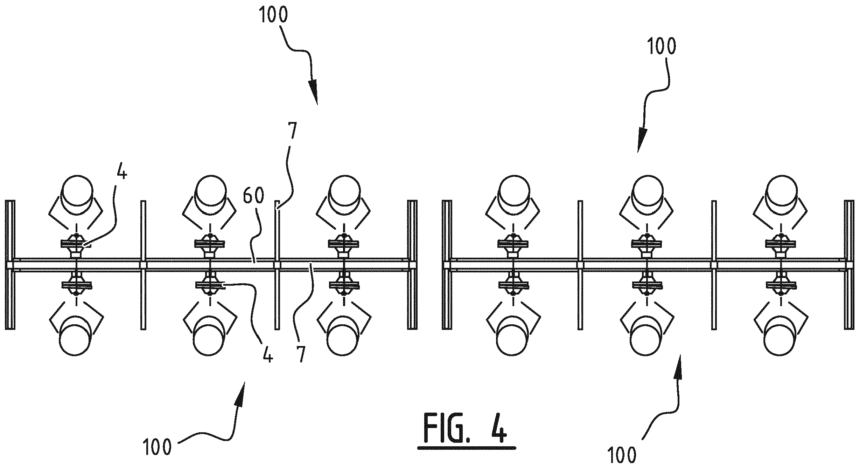

Figure 3 shows an example of a test device 100 wherein two flange pairs 4 are shown located on either side of a central beam 60 of a support frame 6. Flange pairs 4 are for instance situated at a height h4 of about 950 mm, so that they are readily accessible by a tested fitter. Also shown in the figure are partition walls 7 which, as can be seen better in figure 4, separate different test stations for fitters. The height of these partition walls is for instance 950 mm, wherein the underside has a height h2 of about 770 mm. The width b1 can be chosen as 1400 mm.

Shown in the top view of figure 4 are two test devices 100, each with six pairs of flanges. This therefore makes it possible to test twelve fitters simultaneously. As shown, the respective flange pairs 4 on either side of a central beam 60 with pipe parts 10, see figure 3, are connected to central beam 60 of frame 6, wherein the different flange pairs 4 are separated by partition walls 7 in the width direction and in the length direction.

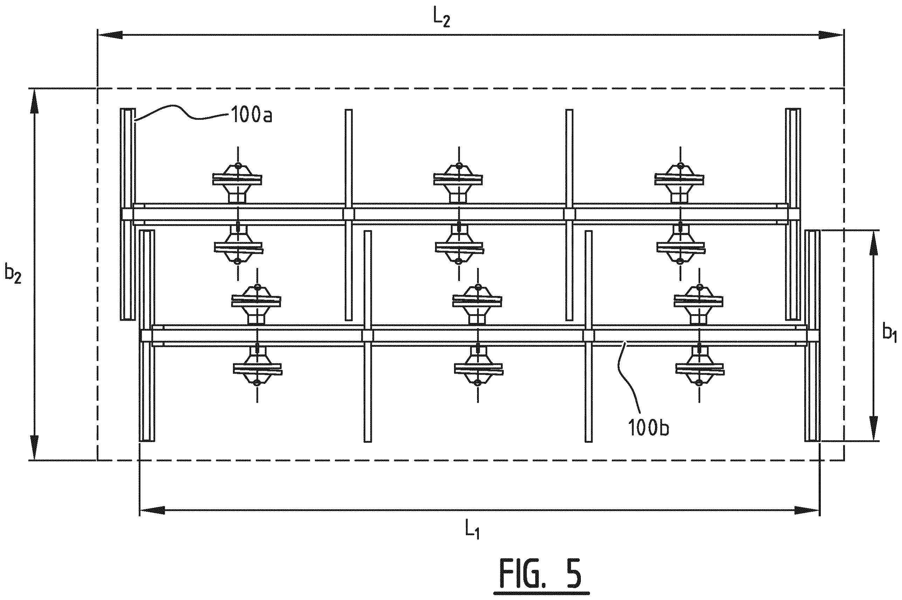

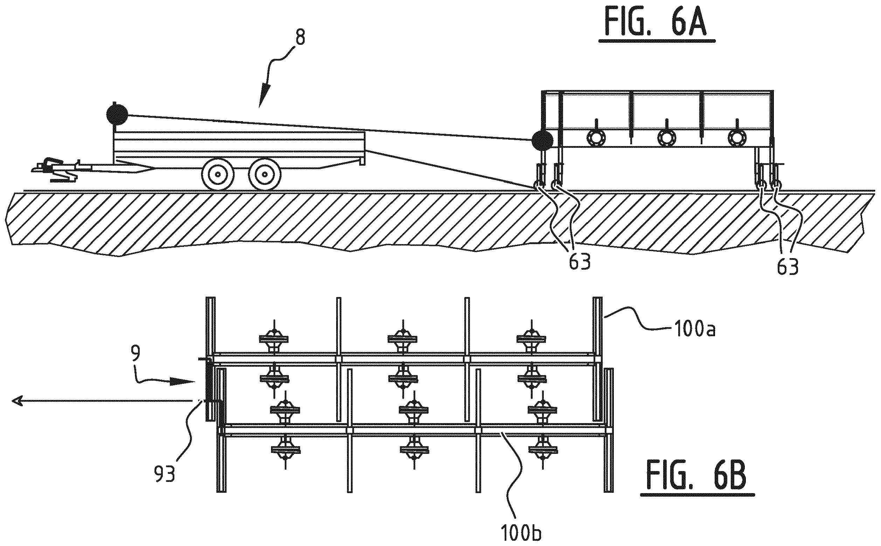

Such a construction makes bringing together of these devices 100 simple, as shown in figure 5. In this figure two test devices 100a, 100b are shown placed together so that a total width b2 of about 2200 mm can be achieved. The overall length L2 of the two systems is then preferably less than 550 mm so that the assembly can be pulled easily onto a trailer, see figures 6A and 6B.

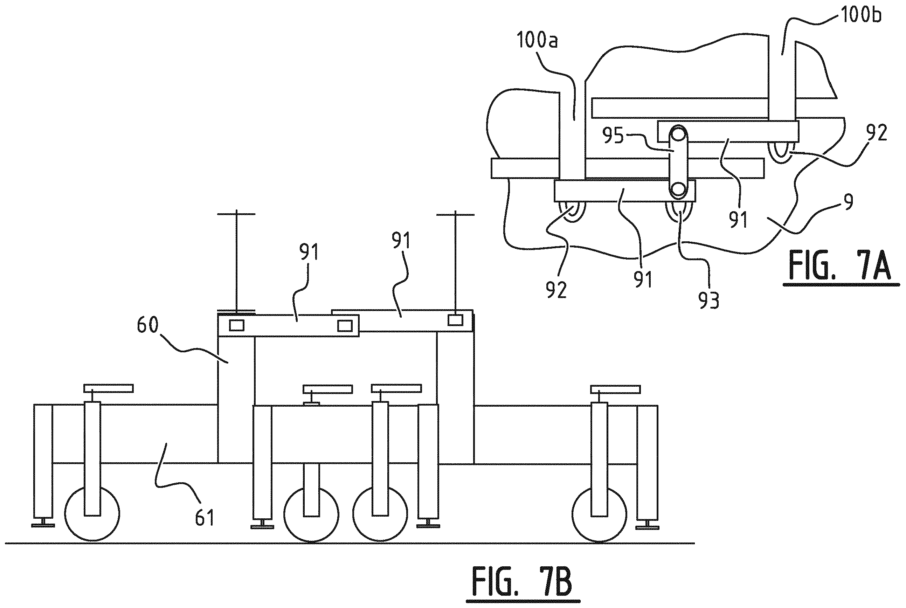

The mutual connection of the two test devices is shown in greater detail in figures 7A and 7B, wherein it can be seen that a coupling 9 is arranged between the end surfaces of test devices 100a, 100b. These test devices 100a, 100b are provided with coupling brackets 91 to which drawbar eyes 92 are connected. Coupling brackets 91 are mutually connected by a pull bracket 95 so that the whole assembly can be easily pulled onto a trailer 8 by pulling on a central drawbar eye 93, see also figures 6A and 6B. Devices 100a, 100b are provided for this purpose with wheels 63.

As alternative or as addition to these wheels, tubular sleeves 69, into which the forks of a forklift truck are inserted, can for instance be arranged on central beam 60 of the frame. The devices can in this way be easily lifted onto for instance a semitrailer or a trailer for transport.

The invention is not limited to the embodiments shown above but also extend to combinations falling within the scope of the appended claims.

## Claims

1. Device (100) for testing and/or training a flange fitter, wherein the device comprises a frame (6) for placing the device on a ground surface and at least one pair of flanges (4) which are mutually connectable by means of a flange connection, wherein a first flange (1) in the flange pair is connected to the frame, **characterized in that** the second flange (2) in the flange pair is connected by means of a support element (3) to the frame in order to support the second flange in at least an uncoupled state of the flange pair.

2. Device (100) as claimed in claim 1, wherein the support element (3) is configured to impose the relative position of the flange in the flange pair (4) in the coupled state, wherein the support element positions the flanges (1, 2) in this coupled state such that the flanges have a mutually differing alignment.

3. Device (100) as claimed in claim 2, wherein the support element (3) positions the flanges (1, 2) with a differing alignment such that:
- the central axes (A1, A2) of the flanges lie at a mutual angle wherein a central axis lies perpendicularly of an end surface of a flange;
- the central axes extend parallel and at a mutual distance from each other; and/or
- the flanges are rotated about the central axis relative to each other.

4. Device (100) as claimed in at least one of the foregoing claims, wherein the second flange (2) is movable between an uncoupled state at a distance from the first flange (1) and a coupled state in which the flanges (1, 2) are in contact with each other, wherein the support element (3) is configured to hold the second flange in the uncoupled state in a rest position.

5. Device (100) as claimed in at least one of the foregoing claims, wherein the second flange (2) is connected to the frame (6) via the support element (3) and without flange connection.

6. Device (100) as claimed in at least one of the foregoing claims, wherein the support element (3) extends between and connects the two flanges (1, 2) and/or wherein the support element is connected in a substantially radial direction to the first (1) and/or second flange (2) as seen relative to a central axis (A1, A2) of the respective first and/or second flange.

7. Device (100) as claimed in at least one of the foregoing claims, wherein the flanges (1, 2) have dimensions for connecting pipelines of corresponding dimensions, wherein the cross-sectional dimensions of the support element (3) are smaller, preferably more than a quarter smaller, than the cross-sectional dimensions of these pipelines.

8. Device (100) as claimed in at least one of the foregoing claims, wherein the support element (3) has a stiffness substantially corresponding to the stiffness of a pipeline with dimensions corresponding to the dimensions of the flanges (1, 2).

9. Device (100) as claimed in at least claims 4 and 8, wherein the support element (3) is configured so that a movement of the second flange (2) from the uncoupled state to the coupled state substantially corresponds in terms of stiffness to the same movement in the pipeline of corresponding dimensions.

10. Device (100) as claimed in at least one of the foregoing claims, wherein the device comprises a plurality of flange pairs (4) with support elements (3) arranged at mutual distance on the frame (6), wherein the flange pairs are separated from each other with partition walls (7), wherein the frame is preferably provided with wheels (63), receiving spaces (69) for receiving forks of a forklift truck and/or coupling means (91, 92, 95) for mutually coupling two devices (100a, 100b).

11. Method for manufacturing a device (100) for testing and/or training a flange fitter as claimed in at least one of the foregoing claims, wherein the method comprises the steps of:
- determining a type of flange for use as the first (1) and second flange (2);
- determining the relative position of the two flanges in a coupled position;
- designing the support element (3) in dependence of the determined flange type and the determined relative position; and
- manufacturing the device in accordance with the determined design.

12. Method as claimed in claim 11, wherein determining the relative position comprises of positioning the flanges (1, 2) with a mutually differing alignment wherein:
- the central axes (A1, A2) of the flanges lie at a mutual angle, wherein a central axis lies perpendicularly of an end surface of a flange;
- the central axes extend parallel and at a mutual distance from each other; and/or
- the flanges are rotated about the central axis relative to each other.

13. Method as claimed in claim 12, further comprising the step of determining a maximum permissible differing alignment of two flanges (4), preferably on the basis of applicable standards for the determined type of flange, wherein determining the relative position comprises of determining a mutually differing alignment which roughly corresponds to, but falls within, this maximum permissible differing alignment.

14. Method as claimed in at least one of the foregoing claims 11 - 13, further comprising the step of determining a stiffness of a piping system corresponding to the determined flange type, for instance by means of simulations, wherein the support element (3) is designed with a corresponding stiffness.

15. Method for testing the competence of a flange fitter, comprising the steps of:
- providing a device (100) according to at least one of the foregoing claims 1-10 or obtained with the method according to at least one of the foregoing claims 11-14, wherein the second flange (2) is in the uncoupled position;
- having the first (1) and second flange (2) coupled by the fitter; and
- inspecting the coupling between the first and the second flange.

## Patentansprüche

1. Vorrichtung (100) zum Testen und/oder zum Trainieren eines Flanschmonteurs, wobei die Vorrichtung einen Rahmen (6) zur Platzierung der Vorrichtung auf einer Bodenfläche und mindestens ein Paar Flansche (4) aufweist, die gegenseitig mittels einer Flanschverbindung verbindbar sind, wobei ein erster Flansch (1) des Flanschpaares mit dem Rahmen verbunden ist, **dadurch gekennzeichnet, dass** der zweite Flansch (2) des Flanschpaares mittels eines Trägerelements (3) an dem Rahmen befestigt ist, um den zweiten Flansch in mindestens einem nicht verbundenen Zustand des Flanschpaares zu tragen.

2. Vorrichtung (100) nach Anspruch 1, wobei das Trägerelement (3) ausgebildet ist, um die Relativposition des Flansches in dem Flanschpaar (4) in dem verbundenen Zustand aufzuerlegen, wobei das Trägerelement die Flansche (1, 2) in diesem verbundenen Zustand so positioniert, dass die Flansche eine gegenseitig unterschiedliche Ausrichtung aufweisen.

3. Vorrichtung (100) nach Anspruch 2, wobei das Trägerelement (3) die Flansche (1, 2) mit einer unterschiedlichen Ausrichtung positioniert, sodass:
- die Mittelachsen (A1, A2) der Flansche in einem gegenseitigen Winkel liegen, wobei eine Mittelachse rechtwinklig zu einer Endfläche eines Flansches liegt,
- die Mittelachsen sich parallel und in einem gegenseitigen Abstand voneinander erstrecken und/oder
- die Flansche um die Mittelachse relativ zueinander gedreht sind.

4. Vorrichtung (100) nach mindestens einem der vorstehenden Ansprüche, wobei der zweite Flansch (2) zwischen einem nicht verbundenen Zustand in einem Abstand von dem ersten Flansch (1) und einem verbundenen Zustand bewegbar ist, in dem die Flansche (1, 2) in Kontakt miteinander stehen, wobei das Trägerelement (3) ausgebildet ist, um den zweiten Flansch in dem nicht verbundenen Zustand in einer Ruheposition zu halten.

5. Vorrichtung (100) nach mindestens einem der vorstehenden Ansprüche, wobei der zweite Flansch (2) mit dem Rahmen (6) über das Trägerelement (3) und ohne Flanschverbindung verbunden ist.

6. Vorrichtung (100) nach mindestens einem der vorstehenden Ansprüche, wobei das Trägerelement (3) sich zwischen den beiden Flanschen (1, 2) erstreckt und sie verbindet und/oder wobei das Trägerelement in einer im wesentlichen radialen Richtung zu dem ersten (1) und/oder dem zweiten Flansch (2) verbunden ist, gesehen relativ zu einer Mittelachse (A1, A2) des jeweiligen ersten und/oder zweiten Flansches.

7. Vorrichtung (100) nach mindestens einem der vorstehenden Ansprüche, wobei die Flansche (1, 2) Abmessungen zur Verbindung von Pipelines mit entsprechenden Abmessungen aufweisen, wobei die Querschnittsabmessungen des Trägerelements (3) kleiner sind, vorzugsweise um mehr als ein Viertel kleiner, als die Querschnittsabmessungen dieser Pipelines.

8. Vorrichtung (100) nach mindestens einem der vorstehenden Ansprüche, wobei das Trägerelement (3) eine Steifigkeit aufweist, die im Wesentlichen der Steifigkeit einer Pipeline mit Abmessungen entspricht, die den Abmessungen der Flansche (1, 2) entsprechen.

9. Vorrichtung (100) nach mindestens den Ansprüchen 4 und 8, wobei das Trägerelement (3) so ausgebildet ist, dass eine Bewegung des zweiten Flanschs (2) aus dem nicht verbundenen Zustand in den verbundenen Zustand hinsichtlich der Steifheit derselben Bewegung in der Pipeline mit entsprechenden Abmessungen entspricht.

10. Vorrichtung (100) nach mindestens einem der vorstehenden Ansprüche, wobei die Vorrichtung eine Anzahl von Flanschpaaren (4) mit Trägerelementen (3) aufweist, die in gegenseitigem Abstand auf dem Rahmen (6) angeordnet sind, wobei die Flanschpaare voneinander mit Trennwänden (7) getrennt sind, wobei der Rahmen vorzugsweise mit Rädern (63), Aufnahmeräumen (69) zur Aufnahme von Gabeln eines Gabelstaplers und/oder Verbindungsmitteln (91, 92, 95) zum gegenseitigen Verbinden von zwei Vorrichtungen (100a, 100b) versehen ist.

11. Verfahren zur Herstellung einer Vorrichtung (100) zum Testen und/oder zum Trainieren eines Flanschmonteurs nach mindestens einem der vorstehenden Ansprüche, wobei das Verfahren die Schritte aufweist:
- Bestimmen eines Flanschtyps zur Verwendung als der erste (1) und der zweite (2) Flansch,
- Bestimmen der Relativposition der beiden Flansche in einer verbundenen Position,
- Gestalten des Trägerelements (3) in Abhängigkeit von dem bestimmten Flanschtyp und der bestimmten Relativposition und
- Herstellen der Vorrichtung in Übereinstimmung mit der bestimmten Gestaltung.

12. Verfahren nach Anspruch 11, wobei das Bestimmen der Relativposition das Positionieren der Flansche (1, 2) mit gegenseitig unterschiedliche Ausrichtung umfasst, wobei:
- die Mittelachsen (A1, A2) der Flansche in einem gegenseitigen Winkel liegen, wobei eine Mittelachse rechtwinklig zu einer Endfläche eines Flansche liegt,
- die Mittelachsen sich parallel und in einem gegenseitigen Abstand voneinander erstrecken und/oder
- die Flansche um die Mittelachse relativ zueinander gedreht sind.

13. Verfahren nach Anspruch 12 mit ferner dem Schritt des Bestimmens einer maximal zulässigen unterschiedlichen Ausrichtung der beiden Flansche (4), vorzugsweise auf Grundlage von anwendbaren Standards für den bestimmten Flanschtyp, wobei das Bestimmen der Relativposition das Bestimmen einer gegenseitig unterschiedlichen Ausrichtung umfasst, die grob der maximal zulässigen unterschiedlichen Ausrichtung entspricht, aber darin hinein fällt.

14. Verfahren nach mindestens einem der Ansprüche 11-13 mit ferner dem Schritt der Bestimmung einer Steifheit eines Pipelinesystems entsprechend dem bestimmten Flanschtyp, beispielsweise mittels Simulationen, wobei das Trägerelement (3) mit einer entsprechenden Steifheit gestaltet ist.

15. Verfahren zum Testen der Kompetenz eines Flanschmonteurs mit den Schritten:
- Vorsehen einer Vorrichtung (100) nach mindestens einem der vorstehenden Ansprüche 1-10 oder mit dem Verfahren nach mindestens einem der vorstehenden Ansprüche 1-14 erhalten, wobei der zweite Flansch (2) in der nicht verbundenen Position ist,
- Verbinden des ersten (1) und des zweiten Flanschs (2) durch den Monteur und
- Prüfen der Verbindung zwischen dem ersten und dem zweiten Flansch.

## Revendications

1. Dispositif (100) pour tester et/ou entraîner un monteur de bride, dans lequel le dispositif comprend un bâti (6) pour placer le dispositif sur une surface au sol et au moins une paire de brides (4) qui sont mutuellement raccordables au moyen d'un raccord à bride, dans lequel une première bride (1) dans la paire de bride est raccordée au bâti, **caractérisé en ce que** la seconde bride (2) dans la paire de bride est raccordée au moyen d'un élément de support (3) au bâti afin de supporter la seconde bride dans au moins un état non accouplé de la paire de bride.

2. Dispositif (100) selon la revendication 1, dans lequel l'élément de support (3) est configuré pour imposer la position relative de la bride dans la paire de bride (4) dans l'état accouplé, dans lequel l'élément de support positionne les brides (1, 2) dans cet état accouplé de telle sorte que les brides présentent un alignement mutuellement différent.

3. Dispositif (100) selon la revendication 2, dans lequel l'élément de support (3) positionne les brides (1, 2) avec un alignement différent de telle sorte que :
- les axes centraux (A1, A2) des brides se trouvent à un angle mutuel dans lequel un axe central se trouve perpendiculairement à une surface d'extrémité d'une bride ;
- les axes centraux s'étendent parallèlement et à une distance mutuelle l'un de l'autre ; et/ou
- les brides sont tournées autour de l'axe central l'une par rapport à l'autre.

4. Dispositif (100) selon au moins l'une des revendications précédentes, dans lequel la seconde bride (2) est mobile entre un état non accouplé à une distance de la première bride (1) et un état accouplé dans lequel les brides (1, 2) sont en contact l'une avec l'autre, dans lequel l'élément de support (3) est configuré pour maintenir la seconde bride dans l'état non accouplé dans une position de repos.

5. Dispositif (100) selon au moins l'une des revendications précédentes, dans lequel la seconde bride (2) est raccordée au bâti (6) par l'intermédiaire de l'élément de support (3) et sans raccord à bride.

6. Dispositif (100) selon au moins l'une des revendications précédentes, dans lequel l'élément de support (3) s'étend entre et raccorde les deux brides (1, 2) et/ou dans lequel l'élément de support est raccordé dans une direction sensiblement radiale à la première (1) et/ou seconde (2) brides en vue par rapport à un axe central (A1, A2) de la première et/ou seconde brides respectives.

7. Dispositif (100) selon au moins l'une des revendications précédentes, dans lequel les brides (1, 2) possèdent des dimensions pour raccorder des conduites de canalisation de dimensions correspondantes, dans lequel les dimensions de section transversale de l'élément de support (3) sont plus petites, de préférence plus d'un quart plus petites, que les dimensions de section transversale de ces conduites de canalisation.

8. Dispositif (100) selon au moins l'une des revendications précédentes, dans lequel l'élément de support (3) possède une rigidité correspondant sensiblement à la rigidité d'une conduite de canalisation avec des dimensions correspondant aux dimensions des brides (1, 2).

9. Dispositif (100) selon au moins les revendications 4 et 8, dans lequel l'élément de support (3) est configuré de sorte qu'un mouvement de la seconde bride (2) de l'état non accouplé à l'état accouplé corresponde sensiblement, en termes de rigidité, au même mouvement dans la conduite de canalisation de dimensions correspondantes.

10. Dispositif (100) selon au moins l'une des revendications précédentes, dans lequel le dispositif comprend une pluralité de paires de bride (4) avec des éléments de support (3) agencés à une distance mutuelle sur le bâti (6), dans lequel les paires de brides sont séparées les unes des autres avec des parois de séparation (7), dans lequel le bâti est de préférence pourvu de roues (63), d'espaces de réception (69) pour recevoir des fourches d'un chariot élévateur à fourche et/ou de moyens d'accouplement (91, 92, 95) pour mutuellement accoupler deux dispositifs (100a, 100b).

11. Procédé pour fabriquer un dispositif (100) pour tester et/ou entraîner un monteur de bride selon au moins l'une des revendications précédentes, dans lequel le procédé comprend les étapes de :
- la détermination d'un type de bride pour l'utilisation en tant que première (1) et seconde (2) brides ;
- la détermination de la position relative des deux brides dans une position accouplée ;
- la désignation de l'élément de support (3) selon le type de bride déterminé et la position relative déterminée ; et
- la fabrication du dispositif conformément à la conception déterminée.

12. Procédé selon la revendication 11, dans lequel la détermination de la position relative comprend le positionnement des brides (1, 2) avec un alignement mutuellement différent dans lequel :
- les axes centraux (A1, A2) des brides se trouvent à un angle mutuel, dans lequel un axe central se trouve perpendiculairement à une surface d'extrémité d'une bride ;
- les axes centraux s'étendent parallèlement et à une distance mutuelle l'un de l'autre ; et/ou
- les brides sont tournées autour de l'axe central l'une par rapport à l'autre.

13. Procédé selon la revendication 12, comprenant en outre l'étape de la détermination d'un alignement différent permissible maximum de deux brides (4), de préférence sur la base de normes applicables pour le type déterminé de bride, dans lequel la détermination de la position relative est composée de la détermination d'un alignement mutuellement différent qui correspond approximativement à, mais se trouve au sein de, cet alignement différent permissible maximum.

14. Procédé selon au moins l'une des revendications précédentes 11 à 13, comprenant en outre l'étape de la détermination d'une rigidité d'un système de tuyauterie correspondant au type de bride déterminé, par exemple au moyen de simulations, dans lequel l'élément de support (3) est conçu avec une rigidité correspondante.

15. Procédé pour tester la compétence d'un monteur de bride, comprenant les étapes de :
- la fourniture d'un dispositif (100) selon au moins l'une des revendications précédentes 1 à 10 ou obtenu avec le procédé selon au moins l'une des revendications précédentes 11 à 14, dans lequel la seconde bride (2) est dans la position non accouplée ;
- l'accouplement des première (1) et seconde (2) brides par le monteur ; et
- l'inspection de l'accouplement entre la première et la seconde bride.
